# EUROPEAN PATENT APPLICATION

(11) **EP 4 796 255 A1**
(43) Date of publication of application: **26.08.2026**
(21) Application number: 26157682.1
(22) Date of filing: 10.02.2026
(51) Int. Cl.: B23Q 3/08, B23Q 7/00, B23Q 7/14, B25J 15/00, B65G 47/00, B65G 49/06

(54) **LOCKING SYSTEM FOR ITEMS ON OVERHEAD CATENARY AND LOCKING METHOD**

(30) Priority: 19.02.2025 IT 202500003255
(71) Applicant: SCM Group S.p.A., 47921 Rimini (RN) (IT)
(72) Inventor: MAGGI, Alberto, 47921 RIMINI (RN) (IT)
(74) Representative: Tiburzi, Andrea

(57) **Abstract**

The present invention relates to a machining system (1) for workpieces (M), such as frames, tiles, panels, window/door frames and the like, comprising an overhead conveyor (2) configured to transport suspended workpieces (M), having a support frame (21). The system (1) comprises at least one locking assembly (3) comprising one or more locking elements (32), configured to removably lock said workpieces (M), so as to perform the processing of the workpiece (M).

The present invention also relates to a method (100) for locking and machining workpieces (M) suspended on an overhead conveyor (2).

## Description

The present invention relates to a locking system for items on an overhead catenary and a locking method.

The present invention relates in particular to machining systems for suspended workpieces, and more particularly to a locking system for workpieces transported on an overhead conveyor and a related locking method to allow for the automated processing of the workpieces themselves.

### Field of the invention

More specifically, the invention concerns a locking system of the aforementioned type, designed and realized in particular for the sanding of window and door frames, but which can be used for any working that requires the piece or workpiece to be machined to be fixed.

In the following, the description will be mainly directed to the sanding of wooden window and door frames, but it is quite evident that the same should not be considered limited to this specific use.

### Prior art

In the sector of producing wooden workpieces, such as frames, doors, and window frames, the machining steps often require the transport and handling of pieces of considerable size.

Generally, these workpieces are transported by means of overhead conveyor systems that allow the pieces to be suspended during the various machining phases. This system allows for optimizing the workspace and facilitating access to the workpieces from different angles.

Finishing operations, such as sanding, which involve the use of a tool in contact with the workpiece, imply that, for precise machining, it must remain in position. For this reason, some operations, such as the sanding just described, are performed mainly manually, with operators intervening on the workpieces suspended from the conveyor or after having removed them and positioned them on special workstations. In the case of large workpieces, operators often have to use lifting platforms to reach the higher areas, with consequent safety and ergonomic problems.

The automation of these machining phases presents several technical complications. One of the main difficulties concerns the stabilization of the suspended workpieces during finishing operations. The natural oscillation of the pieces hanging from the conveyor makes the application of automated tools, such as anthropomorphic robots, complex, as they require a stable work surface to ensure precision and quality of the machining.

Attempts to immobilize the workpieces using mechanical systems, such as expansion arms, have shown significant limitations. These methods tend to create areas that are not accessible to the machining tools, compromising the completeness and uniformity of the surface treatment. Furthermore, the use of such systems can slow down the production flow due to the time required for positioning and removing the locking devices.

The lack of effective solutions for locking suspended workpieces for processing negatively impacts productivity and the quality of the final product. The machining cycles are slowed down, and operators are subjected to non-optimal working conditions, with potential risks to health and safety.

In the sector, there is a felt need for a locking system for workpieces on an overhead conveyor that overcomes the indicated problems.

### Scope of the invention

In light of the above, it is, therefore, an aim of the present invention to provide a locking system for workpieces suspended on an overhead conveyor that allows for efficient and precise automated machining.

Another aim of the invention is to improve the productivity and quality of finishing operations on large workpieces, such as frames and window/door frames.

It is also an aim of the present invention to reduce safety risks and improve the ergonomics for operators during the processing phases of suspended workpieces.

Another scope of the invention is to provide a flexible system adaptable to different sizes and shapes of workpieces.

It is also a scope of the present invention to allow the simultaneous machining of all the front and side elements that make up the window/door frame, excluding the rear ones.

Another scope of the invention is to eliminate areas inaccessible to machining tools, ensuring a complete and uniform surface treatment.

It is also an object of the present invention to optimize the workspace and production flow in the production lines of wooden workpieces.

### Object of the invention

It is, therefore, a specific object of the present invention a machining system for manufactured artifacts, such as frames, tiles, panels, doors, and the like, comprising an overhead conveyor configured to transport suspended manufactured items with a support frame, characterized in that it comprises at least one locking assembly comprising one or more locking elements, configured to removably lock said manufactured items, in order to perform the machining of the manufactured item.

Always according to the invention, said locking assembly may comprise a support base, and said locking elements may be arranged on said support base, wherein said locking elements are of the vacuum type to allow the removable locking of said manufactured items.

Still according to the invention, said locking elements may comprise suction mats and/or suction cups.

Further according to the invention, said system may comprise a vacuum generator, fluidly connected to said locking elements, configured to generate a vacuum in said locking elements, wherein said vacuum generator comprises at least one of a blower, a vacuum pump, and a Venturi system.

Advantageously according to the invention, said locking assembly may comprise a support base for supporting said one or more locking elements.

Preferably according to the invention, said support base of said locking assembly may comprise at least one vertically arranged plane, having a working surface, and said support base comprises sliding guides on which said one or more locking elements may be slidably coupled, so as to slide vertically parallel to said working surface of said plane, or horizontally.

Still according to the invention, said system may comprise machining means for machining said manufactured item.

Preferably according to the invention, said machining means may comprise at least one anthropomorphic robot, configured to perform machining operations such as sanding, painting, and the like, on the manufactured items clamped by said locking elements.

Further according to the invention, said locking assembly may comprise a first vertically arranged plane having a first working surface, oriented in a first direction, one or more locking elements slidably coupled to said first plane by respective sliding guides, a second vertically arranged plane having a second working surface, oriented in a second direction opposite to said first direction, and one or more locking elements slidably coupled to said second plane by respective sliding guides, and a first anthropomorphic robot, configured to machine the manufactured items coupled to said locking elements on said first plane, and a second anthropomorphic robot, configured to machine the manufactured items coupled to said locking elements on said second plane.

Advantageously according to the invention, said system may comprise actuators adapted to move said locking elements along said sliding guides, and may comprise a control logic unit operatively connected to said actuators, to said one or more locking elements, and to said machining means, wherein said control logic unit may be configured to automatically position said locking elements by means of said actuators and actuate their locking function while said machining means are operated to machine the manufactured item.

Still according to the invention, said support frame of said overhead conveyor may comprise a rail, a suspended support arranged parallel to said rail, wherein said suspended support is slidably movable along said rail, and a plurality of hooks fixed to said suspended support, on which said manufactured items are hung.

It is also object of the present invention a method for locking and machining manufactured items suspended on an overhead conveyor by means of the machining system according to any one of the preceding claims, comprising the steps of: positioning a suspended manufactured item near the locking assembly by moving said overhead conveyor; arranging said locking elements; activating said locking elements to clamp the manufactured item; and performing an automated machining on the clamped manufactured item.

Further according to the invention, said automated machining may comprise a sanding operation.

Advantageously according to the invention, said step of positioning said locking elements may be performed according to the dimensions of the manufactured item.

Preferably according to the invention, said method may further comprise a step of rotating the overhead conveyor to allow machining of opposite sides of the manufactured item.

### Brief description of the figures

The present invention will be now described, for illustrative but not limitative purposes, according to its preferred embodiments, with particular reference to the figures of the enclosed drawings, wherein:
figure 1 shows a perspective view of a machining system for production operations, according to a first embodiment of the present invention;
figure 2 shows an exploded view of an area-based gripping system with a grid suction pad, according to a first variant;
figure 3 shows an exploded view of an alternative gripping system with an elongated suction pad, according to a second variant;
figure 4 shows a perspective view of a machining system for production operations, according to a second embodiment of the present invention;
figure 5 shows a perspective view of a machining system for production operations, according to a third embodiment of the present invention; and
figure 6 shows a flowchart illustrating a method for locking and machining workpieces.

### Detailed description

In the various figures, similar parts will be indicated with the same reference numerals.

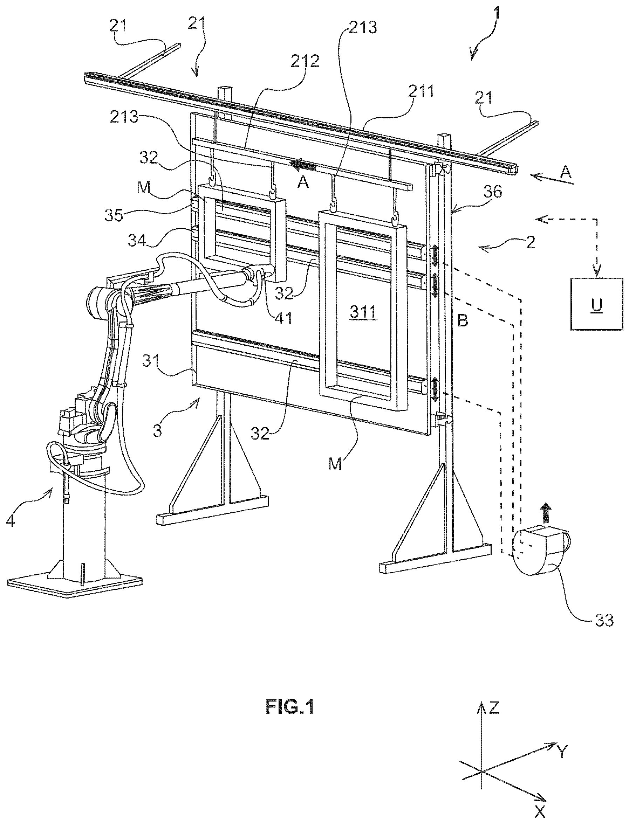

With reference to figure 1, a machining system 1 for suspended items M is illustrated. The system 1 comprises an overhead conveyor 2 supported by a support frame 21 schematically indicated in the figure. The conveyor 2 is configured to transport suspended items M.

The overhead conveyor 2 comprises a rail 211, a movable suspended support 212 slidable along the rail 211, and a plurality of hooks 213 fixed to the suspended support 212 for hanging the items M.

The movable suspended support 212 is in turn movable horizontally (i.e., in the direction of arrow A, which has a direction parallel to the X-axis of the Cartesian triplet XYZ shown in figure 1) with respect to the rail 211.

The workpieces M can have dimensions up to 2.6 m in height and 3 m in length. Such measurements are only indicative and not limiting.

The machining system 1 further comprises a locking assembly 3 comprising a support base 31 and one or more locking elements 32 arranged on the support base 31. The support base 31 and the locking elements 32 are supported by a respective support frame 36.

Said locking elements 32 have a substantially longitudinal shape and are arranged horizontally and parallel to one another in the present embodiment. The locking elements 32 are particularly oriented in the direction of the X-axis of the Cartesian triplet shown in figure 1.

The locking elements 32 are configured to removably lock the items M and are of the vacuum type, comprising suction mats and/or suction cups.

A vacuum generator 33 is fluid-dynamically connected to the locking elements 32 to generate the vacuum necessary to couple the items M to be machined to them.

The vacuum generator 33 may comprise at least one of an electric fan, a vacuum pump, and a Venturi system.

The machining system 1 comprises machining means 4 for machining the item M locked in position. In the embodiment shown, the machining means are an anthropomorphic robot 4, configured to perform operations such as sanding and painting. The head 41 of the anthropomorphic robot 4 generally has the ability to detect the cutting force during machining. The anthropomorphic robot 4 can be equipped with various types of abrasive tools depending on the shape of the frame of the item M. Alternatively, the anthropomorphic robot 4 can be equipped with other tools or machining means.

The locking elements 32 can be positioned manually or automatically using positioning devices controlled by dimensional detection systems already present in the conveyor system 2. In particular, the dimensions and geometry of the items M are known and read by an optical bar (not shown in the figure), useful for storing the positioning of the locking elements 32 based on the geometry and dimensions of the item M to be machined.

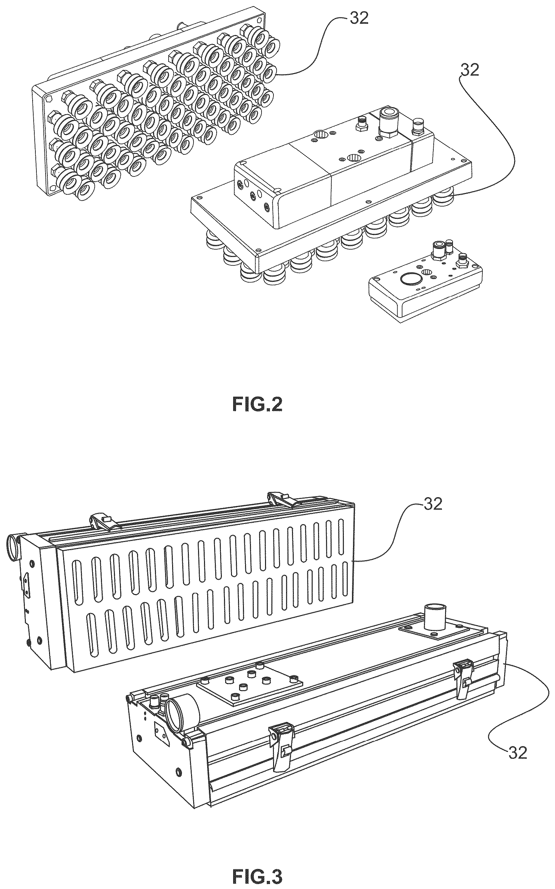

With reference to figures 2 and 3, two different fastening systems with which the locking elements 32 can be equipped are illustrated. Figure 2 shows a pad with a matrix of small suction elements of the small suction cup type arranged in a grid configuration. Figure 3, instead, illustrates a pad with elongated suction elements of the "mat" type such as sponge rubber and the vacuum is generated externally by a pump, arranged in parallel channels. Both systems are designed to provide a distributed vacuum grip over larger surfaces of the items M during the machining operations.

In other embodiments, other fastening systems, including vacuum ones, such as suction cups and the like, can be implemented.

The support base is implemented by means of a vertical plane 31 and serves as a support for the locking elements 32. The vertical plane 31 presents, as can be seen, a working surface 311, on which the locking elements 32 are placed in abutment.

In other embodiments, the locking system 32 could also be oriented differently, besides horizontally as shown in figure 1. For example, said locking system 2 can be arranged vertically or obliquely, or be a solid plane.

In some embodiments, it is possible to provide for the arrangement of the locking elements also on the surface opposite to the surface 311 (the one not visible in figure 1), so as to be able to hold multiple items M locked with the same locking assembly 3.

The support base 31 also comprises sliding guides 34, arranged at the sides and oriented vertically (i.e., parallel to the Z-axis of the Cartesian triplet XYZ), on which the locking elements 32 are slidably coupled, so as to slide vertically, as indicated by the double-direction arrows B, also oriented in the direction of the Z-axis of the Cartesian triplet XYZ shown in figure 1.

In other embodiments, said support base 31 can also slide horizontally.

In some embodiments, the locking system 1 may comprise actuators 35 for moving the locking elements 32 along the sliding guides 34.

The actuators 35 allow the positioning of the locking elements 32 according to the dimensions and shape of the pieces or items M to be machined.

Furthermore, the locking system 1 comprises a logic control unit U, connected to the actuators 35, to the locking elements 32, to the vacuum generator 33 and to the machining means 4. The control unit U coordinates the operation of the various components of the system 1, managing the positioning of the locking elements 32 and the control of the machining means 4.

As can be seen, once the workpieces M (which in figure 1 are two and of different sizes) are fixed to the locking elements 32 while the anthropomorphic robot 4 performs a machining, which in the case in question is sanding, by means of the suitable tool on the head 41. Sanding, as mentioned, is a machined that involves contact between the machining tool and the item M to be machined. Thanks to the vacuum created by the vacuum generator 33 and the locking elements 32, the items M remain fixed in position.

Furthermore, as can be seen, the locking elements 32 are not uniformly arranged (the first two at the top are closer, the third at the bottom is further away than the first two), to be able to couple items M, which in the case in question are window frames, of different sizes. In fact, the first two locking elements 32 hold the smaller item M on the left in position, while all three locking elements 32 hold the larger item M in position.

Thanks to the vacuum created by the vacuum generator 33, it is possible to temporarily hold the item M to be machined in a locked position for as long as necessary.

The logic control unit U is configured to manage and optimize the operation of the locking system 1 to allow the machining of item M, ensuring effective execution of operations based on preset parameters and real-time detected operating conditions.

In a first embodiment, the logic control unit U can be implemented as a programmable logic controller (PLC).

In a second embodiment, the logic control unit U is realized by means of a microcontroller or FPGA (Field Programmable Gate Array) based control system and is programmed to perform advanced optimization strategies for the machining process.

In particular, the unit U is capable of dynamically adapting the locking elements 32 according to the working conditions, using predictive models based on artificial intelligence or machine learning.

The logic control unit U can also integrate a user interface (not shown in the figure), such as a touchscreen control panel or a SCADA (Supervisory Control And Data Acquisition) software-based interface, which allows the operator to modify operating parameters, such as the position of the locking elements 32, even directly, view the status of the locking system 1 and receive notifications or alerts in case of anomalies.

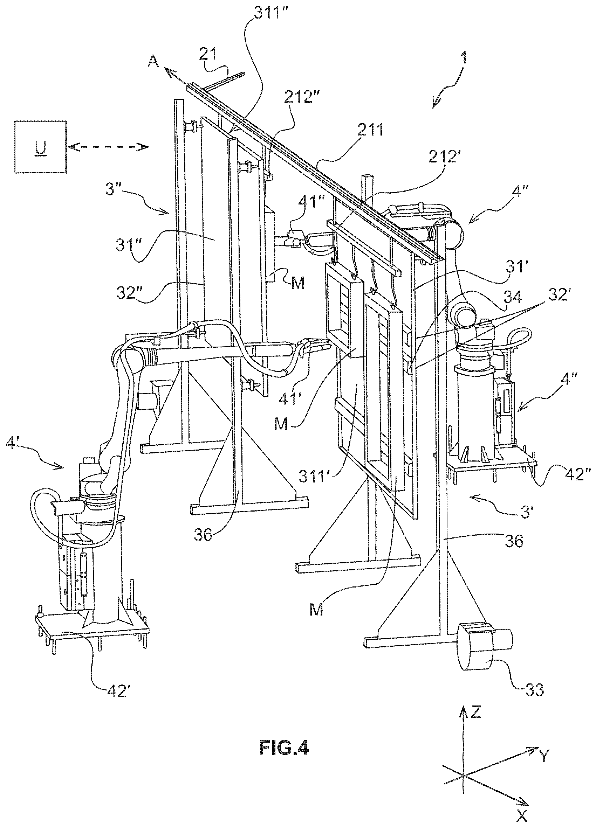

With reference to figure 4, a second embodiment of a machining system 1 according to the present invention is illustrated.

The system 1 comprises two locking assemblies 3' and 3", positioned one after the other and arranged on the same overhead conveyor 2. The vertical support bases 31' and 31" of the respective locking assemblies 3', 3" comprise a first 31' and a second 31" vertical plane. The vertical planes 31', 31" are equipped with vacuum holding mechanisms like that of the first embodiment.

The locking system 1 comprises two robotic arms 4' and 4", one positioned on each side of the pieces. The articulated robotic arms 4' and 4" are mounted on mobile bases 42' and 42" and are configured to perform machining operations on the pieces.

The vertical planes 31' and 31" of the two locking assemblies 3' and 3" incorporate respective sliding guides 34 that allow for the vertical adjustment of the locking elements 32 (in the direction of the Z-axis). The rail 211 of the conveyor 2 extends through the upper part of the structure.

The working surface 311' of the first vertical plane 31' is oriented in one direction (which in figure 4 is the negative direction of the Y-axis of the Cartesian triplet XYZ shown in figure 4), while the working surface 311" of the second vertical plane 31" is oriented in a direction opposite to that of the working surface 311' of the first vertical plane 31'.

This arrangement allows for the simultaneous machining of both sides of the suspended pieces by the robotic arms 4', 4", without risk of collision or overlapping of the working areas of said robotic arms 4', 4". The vacuum holding mechanisms or systems keep the items M in position. The layout of the system provides accessibility for the robotic arms 4', 4" to reach all areas of the items M during machining operations.

In some embodiments, the conveyor 2 can be rotated 180° to allow the machining of opposite sides of the pieces using the same robot 4.

The locking system 1 according to the embodiment shown in figure 1, or that shown in figure 4, can be implemented on all automatic painting, sanding, and general machining lines for window frames, optimizing the production process.

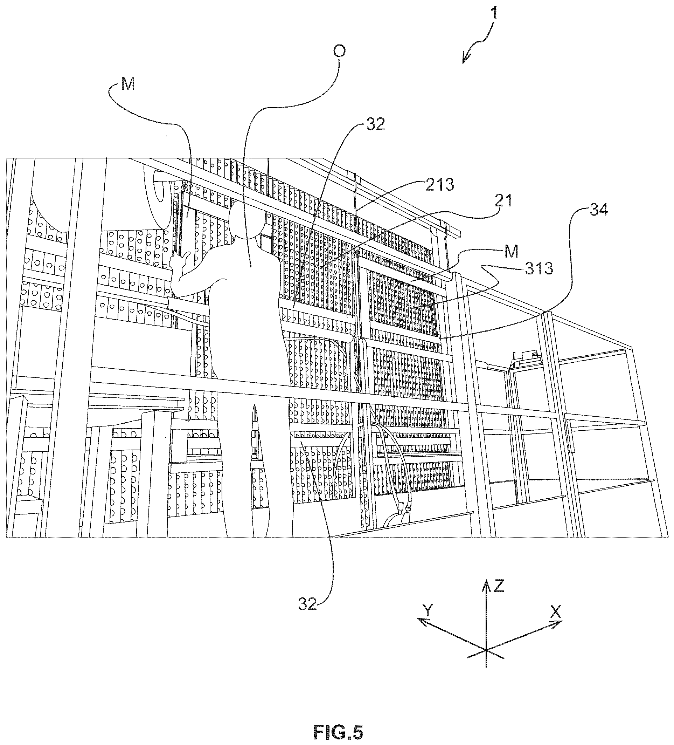

Figure 5 illustrates a perspective view of a locking system 1 for machining articles. The system 1 comprises a vertical support structure characterized by a support base 31 with holes 313 arranged regularly in a grid configuration.

The system 1 comprises an overhead conveyor 2 mounted along the upper part of the structure.

The locking system 1 has the locking elements 32 arranged horizontally. The figure also shows an operator O manually positioning a item M directly on the locking elements 32.

Furthermore, the system 1 in this case also comprises the logic control unit U connected to the actuators 34, to the locking elements 32 and to the machining means (not shown in the figure).

The logic control unit U coordinates the operation of the various components of the system 1, managing the positioning of the locking elements 32, according to the size of the item M to be machined, the activation of the vacuum and the control of the machining means.

Beyond the use of machining means, the items M can be locked or held in position by the vacuum locking elements 32 also for manual operations performed directly on the item M by the operator O.

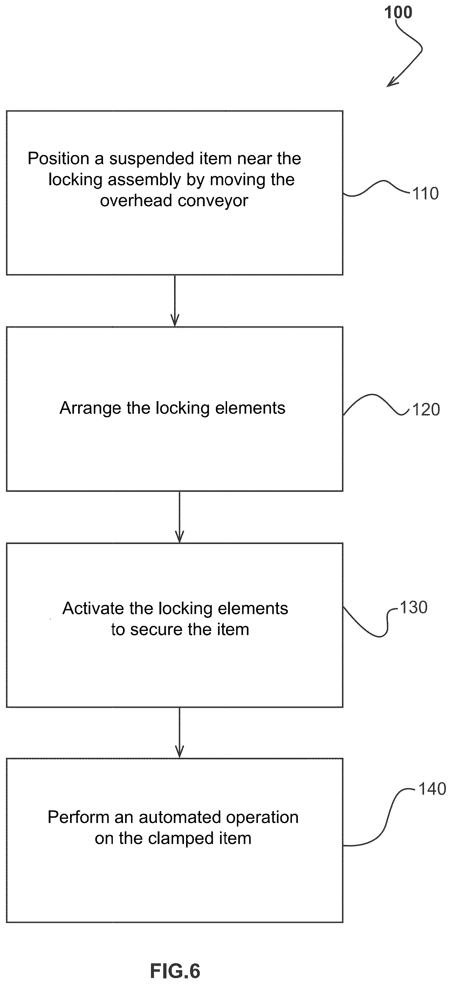

With reference to figure 6, a flowchart representing a method 100 for machining suspended articles or items M is shown.

The method 100 comprises a sequence of steps that allow for the locking and automated machining of the items M.

The first step of the method consists in positioning (step 110) a suspended workpiece in proximity to the locking assembly 3 by moving the overhead conveyor 2. This step allows the item M to be brought into the correct position for subsequent operations.

Subsequently, the method 100 provides for the arrangement (step 120) of the locking elements 32. In this step, the locking elements 32 are positioned to adapt to the dimensions and shape of the item M to be machined. In this step, the logic control unit U activates the movement of the actuators 34, which allow the vertical movement of the locking elements. The positioning can be carried out both automatically, as just mentioned, and manually.

The arrangement and spacing between the different locking elements 32 occurs according to the number and size of the items M to be held locked.

The third step (step 130) consists in activating the locking elements 32 to lock the item M. In this step, the locking elements 32 are actuated, for example by generating a vacuum by means of the vacuum generator 33, to firmly immobilize the item M in the desired position.

Once the item M has been securely locked, the method 100 proceeds with the execution of an automated machining (step 140) on the locked item M. This machining can include various operations, such as sanding, performed by means of robotic systems or other automated devices.

The method 100 may also provide for a step of rotating the overhead conveyor 2 to allow the machining of opposite sides of the item M. This rotation allows access to all surfaces of the workpiece without the need for manual repositioning.

The described method 100 can be implemented by means of a computer program, executed by the logic control unit U, comprising instructions which, when executed by a computer, cause the computer to perform the steps of the method. Such instructions may be stored on a computer-readable storage medium, such as a non-volatile memory or an optical or magnetic storage medium.

### Advantages

An advantage of the present invention is that it provides a locking system for workpieces suspended on an overhead conveyor that allows for efficient and precise automated machining, overcoming the limitations of traditional manual methods.

Another advantage of the present invention is that it improves the productivity and quality of finishing operations on large workpieces, such as frames and window/door frames, thanks to the stabilization of the pieces during machining.

It is also an advantage of the present invention to reduce safety risks and improve ergonomics for operators, eliminating the need for manual interventions on lifting platforms to reach the higher areas of the workpieces.

Another advantage of the present invention is that it provides a flexible and adaptable system for different sizes and shapes of workpieces, thanks to the adjustable locking elements and sliding guides.

It is also an advantage of the present invention to allow the simultaneous machining of both sides of the workpieces without the need for their rotation, through the use of two opposite vertical planes with relative locking elements and robots.

Another advantage of the present invention is that it eliminates areas inaccessible to machining tools, ensuring a complete and uniform surface treatment of the workpieces.

It is also an advantage of the present invention to optimize the workspace and production flow in the production lines of wooden workpieces, keeping the pieces suspended on the overhead conveyor during the machining phases.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machining system (1) for manufactured items (M), such as frames, tiles, panels, doors, and the like, comprising
an overhead conveyor (2) configured to transport suspended manufactured items (M) with a support frame (21),
**characterized in that** it comprises at least one locking assembly (3) comprising one or more locking elements (32), configured to removably lock said manufactured items (M), to perform the machining of the manufactured item (M).

2. Machining system (1) according to claim 1, **characterized**
**in that** said locking assembly (3) comprises a support base (31), and
**in that** said locking elements (32) are arranged on said support base (31),
wherein said locking elements (32) are of the vacuum type to allow the removable locking of said manufactured items (M).

3. Machining system (1) according to the preceding claim, **characterized in that** said locking elements (32) comprise suction mats and/or suction cups.

4. Machining system (1) according to any one of claims 2 or 3, **characterized**
**in that** it comprises a vacuum generator (33), fluidly connected to said locking elements (32), configured to generate a vacuum in said locking elements (32),
wherein said vacuum generator (33) comprises at least one of a blower, a vacuum pump, and a Venturi system.

5. Machining system (1) according to any one of the preceding claims, **characterized in that** said locking assembly (3) comprises a support base (31) for supporting said one or more locking elements (32).

6. Machining system (1) according to the preceding claim, **characterized**
**in that** said support base of said locking assembly (3) comprises at least one vertically arranged plane (31), having a working surface (311),
wherein said support base (31) comprises sliding guides (34) on which said one or more locking elements (32) are slidably coupled, so as to slide vertically (Z) parallel to said working surface (311) of said plane (31), or horizontally.

7. Machining system (1) according to any one of the preceding claims, **characterized in that** it comprises machining means (4) for machining said manufactured item (M).

8. Machining system (1) according to the preceding claim, **characterized in that** said machining means comprise at least one anthropomorphic robot (4), configured to perform machining operations such as sanding, painting, and the like, on the manufactured items (M) clamped by said locking elements (32).

9. Machining system (1) according to any one of the preceding claims, **characterized**
**in that** said locking assembly (3) comprises:
a first vertically arranged plane (31') having a first working surface (311'), oriented in a first direction,
one or more locking elements (32') slidably coupled to said first plane (31') by respective sliding guides (34'),
a second vertically arranged plane (31") having a second working surface (311"), oriented in a second direction opposite to said first direction, and
one or more locking elements (32") slidably coupled to said second plane (31") by respective sliding guides (34"), and
**in that** it comprises a first anthropomorphic robot (4'), configured to machine the manufactured items (M) coupled to said locking elements (32') on said first plane (31'), and a second anthropomorphic robot (4"), configured to machine the manufactured items (M) coupled to said locking elements (32") on said second plane (31").

10. Machining system (1) according to any one of the preceding claims, when dependent on claims 6 and 7, **characterized**
**in that** it comprises actuators (35) adapted to move said locking elements (32) along said sliding guides (34), and
**in that** it comprises a control logic unit (U) operatively connected to said actuators (35), to said one or more locking elements (32), and to said machining means (4),
wherein said control logic unit (U) is configured to automatically position said locking elements (32) by means of said actuators (35) and actuate their locking function while said machining means (4) are operated to machine the manufactured item (M).

11. Machining system (1) according to any one of the preceding claims, **characterized in that** said support frame (21) of said overhead conveyor (2) comprises
a rail (211),
a suspended support (212) arranged parallel to said rail (211), wherein said suspended support (212) is slidably movable along said rail (211), and
a plurality of hooks (213) fixed to said suspended support (212), on which said manufactured items (M) are hung.

12. Method (100) for locking and machining manufactured items (M) suspended on an overhead conveyor (2) by means of the machining system (1) according to any one of the preceding claims, comprising the steps of:
positioning (110) a suspended manufactured item (M) near the locking assembly (3) by moving said overhead conveyor (2);
arranging (120) said locking elements (32);
activating (130) said locking elements (32) to clamp the manufactured item (M); and
performing (140) an automated machining on the clamped manufactured item (M).

13. Method (100) according to the preceding claim, **characterized in that** said automated machining comprises a sanding operation.

14. Method (100) according to claim 12 or 13, **characterized in that** said step of positioning (110) said locking elements (32) is performed according to the dimensions of the manufactured item (M).

15. Method (100) according to any one of claims 12 - 14, further comprising a step of rotating the overhead conveyor (2) to allow machining of opposite sides of the manufactured item (M).
